## Europäisches Patentamt
## European Patent Office
## Office européen des brevets

(19)

(11) Numéro de publication: **0 217 296**
**B1**

(12) **FASCICULE DE BREVET EUROPEEN**

(45) Date de publication du fascicule du brevet: **11.07.90**

(21) Numéro de dépôt: **86113225.6**

(22) Date de dépôt: **25.09.86**

(51) Int. Cl.⁵: **G 02 B 6/44**

(54) Tête de pose de fibres optiques dans les rainures à pas alterné d'un jonc cylindrique.

(30) Priorité: **01.10.85 FR 8514550**

(43) Date de publication de la demande:
**08.04.87 Bulletin 87/15**

(45) Mention de la délivrance du brevet:
**11.07.90 Bulletin 90/28**

(84) Etats contractants désignés:
**BE CH DE FR GB IT LI NL SE**

(56) Documents cités:
**EP-A-0 058 594**
**EP-A-0 061 124**
**EP-A-0 113 973**
**GB-A-2 022 644**

(73) Titulaire: **LES CABLES DE LYON Société anonyme dite:**
**170 quai de Clichy**
**F-92111 Clichy Cedex (FR)**

(72) Inventeur: **Girardon, Noel**
**30, rue Christophe Colomb**
**F-78500 Sartrouville (FR)**
Inventeur: **Delbar, Jack**
**7 la Cerisaie**
**F-78700 Conflans Sainte Honorine (FR)**

(74) Mandataire: **Weinmiller, Jürgen et al**
**Lennéstrasse 9 Postfach 24**
**D-8133 Feldafing (DE)**

EP 0 217 296 B1

Courier Press, Leamington Spa, England.

## Description

La présente invention concerne une tête de pose de fibres optiques dans les rainures d'un jonc cylindrique, les rainures étant à pas alterné.

D'une manière générale, une installation de pose comporte un touret sur lequel est enroulé le jonc, un plateau sur lequel sont montées les bobines de fibres optiques, une tête de pose des fibres dans les rainures du jonc, au moins une filière de répartition entre le plateau porte-bobines et la tête de pose, puis un dispositif de guipage, un touret de réception du jonc garni de ses fibres, et enfin divers dispositifs de traction et de contrôle placés en divers points le long de la ligne de fabrication.

Dans une telle installation, la tête de pose est un organe essentiel dont la fonction principale est de placer les fibres dans les rainures du jonc sans leur faire subir de fortes tensions ou pressions, ou des courbures même faibles. Cette tête de pose doit de plus être la plus légère possible et notamment quand celle-ci est le seul élément tournant, ce qui est le cas quand les rainures sont à pas alterné.

On connaît des têtes de pose de fibres optiques dans des rainures à pas alterné d'un jonc cylindrique, comportant trois filières successives, une filière d'entrée, une filière d'indexation et une filière d'insertion dans le jonc.

La demande de brevet EP-A-0 058 594 concerne une tête de pose simultanée de fibres optiques dans un support cylindrique rainuré, qui comporte un mandrin tournant constitué d'un tube creux muni d'un guide avant traversé par les fibres optiques, ledit tube creux étant traversé longitudinalement par un support cylindrique rainuré, une rondelle solidaire et axialement alignée avec le tube, et percée d'une ouverture centrale présentant une bordure intérieure pourvue de parties saillantes radiales reposant chacune au fond d'une rainure de support, et une pièce d'insertion des fibres optiques dans les rainures du support, percée d'une ouverture centrale alignée avec celle de la rondelle permettant le passage du support.

Mais dans ces têtes de pose, les fibres ne sont pas guidées entre la dernière filière de répartition et la filière d'entrée de la tête de pose, provoquant ainsi des frottements entre fibres, ou plus grave encore des emmêlements entre fibres.

GB 2022644 décrit un dispositif de fabrication d'un câble optique, dans lequel un câble optique est assemblé par insertion de guides d'ondes optiques diélectriques dans un filament ayant périodiquement des rainures hélicoïdales. Un guide optique diélectrique est déroulé à partir de bobines fixes par le mouvement du filament sur les bobines. Une unité de guide déplaçable en rotation présente des tubes flexibles à travers lesquels le guide optique diélectrique est guidé, les extrémités du tube étant disposées dans les rainures de telle façon que respectivement les guides optiques diélectriques et les rainures soient maintenus en coïncidence circonférentielle. En amont de ladite unité de guide deplaçable en rotation se trouve par ailleurs disposé un organe fixe de distribution des fibres optiques.

La présente invention a pour but d'assurer un guidage efficace des fibres assurant l'isolement de chacune.

La présente invention a pour objet une tête de pose de fibres optiques dans les rainures à pas alterné d'un jonc cylindrique, comportant un ensemble de trois filières successives solidaires les unes des autres, à savoir respectivement, une filière d'entrée, une filière d'indexation comportant des peignes d'indexation, et une filière d'insertion, ledit ensemble de trois filières étant destiné à être entraîné, par le défilement longitudinal du jonc rainuré à pas alterné au travers de ces trois filières, en un mouvement rotatif oscillant autour dudit axe de défilement, chaque fibre optique étant guidée dans un orifice de la filière d'entrée, puis introduite dans un orifice de la filière d'indexation, et enfin posée dans une rainure du jonc par la filière d'insertion, ladite tête de pose comportant en outre, en amont de la filière d'entrée, un mandrin au travers duquel défile le jonc, ce mandrin étant constitué d'un tube muni à son extrémité amont d'un guide-avant traversé par les fibres optiques, ladite tête de pose étant caractérisée en ce que le mandrin est fixe, en ce que l'ensemble des trois filières solidaires les unes des autres est monté tournant sur un roulement lié à l'extrémité aval du tube du mandrin, lesdites trois filières étant solidarisées les unes aux autres par un étrier cylindrique à l'intérieur duquel lesdites filières sont disposées à distance les unes des autres, et en ce que le mandrin comporte, entre le guide-avant et la filière d'entrée de la tête, une série de galets montés tournants autour du tube.

Il est décrit ci-après, à titre d'exemple et en référence aux dessins annexés, une tête de pose selon l'invention.

La figure 1 montre une installation de pose munie de la tête de pose selon l'invention.

La figure 2 montre une coupe longitudinale partielle de cette tête de pose.

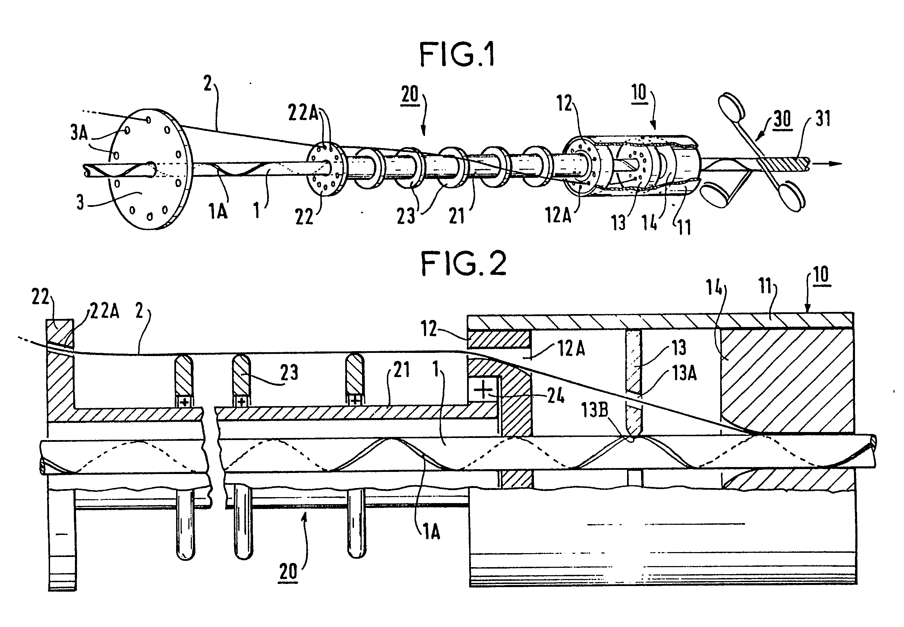

Dans la figure 1 l'installation de pose n'est que partiellement représentée; on y voit un jonc 1 fixe en rotation et muni de rainures 1A à pas alterné, une filière de répartition 3 fixe et munie d'orifices 3A traversés chacun par une fibre 2 provenant de bobines non représentées, une tête de pose 10 oscillante, son mandrin fixe 20 constitué d'un tube 21, et un dispositif de guipage 30 appliquant un ruban 31 sur le jonc 1 après l'opération de pose des fibres 2 dans les rainures. Bien entendu, une fibre optique 2 pourrait être également un faisceau de fibres optiques.

La tête de pose 10 comporte un étrier cylindrique 11 à l'intérieur duquel sont fixées une filière d'entrée 12, une filière d'indexation 13 et une filière d'insertion 14.

La filière d'entrée 12 comporte des orifices obliques 12A, traversés chacun par une fibre optique 2.

La filière d'indexation 13 comporte des orifices 13A et des peignes d'indexation 13B, visibles en figure 2, se logeant chacun dans une rainure du jonc. Cette filière 13 assure donc à la tête 10 une position angulaire asservie à la position réelle des rainures.

Les orifices 13A, traversés chacun par une fibre optique 2, ne sont que des orifices de passage, ils n'assurent aucune fonction de guidage des fibres.

La filière d'insertion 14 assure la pose des fibres 2 dans les rainures 1A et leur maintien jusqu'à l'opération de guipage.

Le tube 21 du mandrin 20 est fixé rigidement à la ligne de fabrication, donc à l'ensemble des dispositifs fixes de guidage, et la tête 10 est montée sur un roulement 24 (visible en figure 2) lié à l'extrémité du tube 21 du mandrin 20.

Ce tube 21 du mandrin 20 comporte un guide-avant 22 muni d'orifices 22A pour le guidage des fibres, et plusieurs galets 23 montés sur roulement. Du fait de la rotation alternée de la tête 10, chaque longuer de fibres située entre le guide-avant 22 et la filière d'éntrée 12 de la tête 10 effectue un mouvement de va et vient autour d'une génératrice du jonc. La longueur du mandrin est bien entendu suffisante pour ne pas engendrer des écarts angulaires trop importants.

Même sous faible tension, toutes les fibres sont appliquées contre les bords extérieurs des galets. La distance angulaire entre fibres reste constante et ceci élimine tout risque de frottement ou de mélange entre fibres destinées à prendre place dans des rainures distinctes.

Dans la figure 2, on voit bien que la filière d'entrée 12 et la filière d'insertion 14 sont distantes d'une valeur liée au diamètre de ces filières de façon que l'angle d'une fibre par rapport à l'axe du jonc soit à une valeur optimale assurant des frottements minimum.

## Revendications

1. Tête de pose (10, 20) de fibres optiques (2) dans les rainures (1A) à pas alterné d'un jonc (1) cylindrique, comportant un ensemble (10) de trois filières successives solidaires les unes des autres, à savoir respectivement, une filière d'entrée (12), une filière d'indexation (13) comportant des peignes d'indexation, et une filière d'insertion (14), ledit ensemble (10) de trois filières étant destiné à être entraîné, par le défilement longitudinal du jonc rainuré à pas alterné au travers de ces trois filières, en un mouvement rotatif oscillant autour dudit axe de défilement, chaque fibre optique étant guidée dans un orifice (12A) de la filière d'entrée (12), puis introduite dans un orifice (13A) de la filière d'indexation (13), et enfin posée dans une rainure du jonc par la filière d'insertion (14), ladite tête de pose (10, 20) comportant en outre, en amont de la filière d'entrée (12), un mandrin (20) au travers duquel défile le jonc, ce mandrin étant constitué d'un tube (21) muni à son extrémité amont d'un guide-avant (22) traversé par les fibres optiques, ladite tête de pose (10, 20) étant caractérisée en ce que le mandrin (20) est fixe, en ce que l'ensemble (10) des trois filières solidaires les unes des autres est monté tournant sur un roulement (24) lié à l'extrémité aval du tube (21) du mandrin (20), lesdites trois filières étant solidarisées les unes aux autres par un étrier (11) cylindrique à l'intérieur duquel lesdites filières sont disposées à distance les unes des autres, et en ce que le mandrin (20) comporte, entre le guide-avant (22) et la filière d'entrée (12) de la tête, une série de galets (23) montés tournants autour du tube (21).

2. Tête de pose selon la revendication 1, caractérisée en ce que la filière d'entrée (12) et la filière d'insertion (14) sont distantes d'une valeur liée au diamètre de ces filières de façon que l'angle d'une fibre par rapport à l'axe du jonc soit à une valeur optimale assurant des frottements minimum.

## Patentansprüche

1. Kopf (10, 20) zum Einlegen von Lichtleitfasern (2) in die Nuten (1A) eines zylindrischen Stabs (1) mit wechselnder Spiralneigung, der eine Einheit (10) von drei miteinander verbundenen aufeinanderfolgenden Zieheisen aufweist, nämlich einem Eingangszieheisen (12), einem Indexierzieheisen (13) mit Indexierkämmen und einem Einlegezieheisen (14), wobei die Einheit (10) der drei Zieheisen dazu bestimmt ist, durch die Längsbewegung des mit wechselnder Spiralneigung genuteten Stabs durch diese drei Zieheisen in eine alternierende Drehbewegung um die Durchlaufachse versetzt zu werden, wobei jede Lichtleitfaser in einer Öse (12A) des Eingangszieheisens (12) geführt und dann in eine Öse (13A) des Indexierzieheisens (13) eingeführt und schließlich in eine Nut des Stabs durch das Einlegezieheisen (14) gelegt wird, wobei der Kopf (10, 20) weiter vor dem Eingangszieheisen (12) eine Hülse (20) aufweist, durch die der Stab verläuft, wobei diese Hülse aus einem Rohr (21) besteht, das an seinem vorderen Ende mit einer Frontführung (22) ausgestattet ist, die von den Lichtleitfasern durchlaufen wird, dadurch gekennzeichnet, daß die Hülse (20) fest ist, daß die Einheit (10) der drei fest miteinander verbundenen Zieheisen drehend auf einem Lager (24) angeordnet ist, das mit dem hinteren Ende des Rohrs (21) der Hülse (20) verbunden ist, wobei die drei Zieheisen miteinander durch einen zylindrischen Bügel (11) verbunden sind, in dessen Inneren die Zieheisen in Abstand zueinander angeordnet sind, und daß die Hülse (20) zwischen der Frontführung (22) und dem Eingangszieheisen (12) des Kopfes eine Reihe von Rollen (23) aufweist, die um das Rohr (21) drehend angeordnet sind.

2. Kopf nach Anspruch 1, dadurch gekennzeichnet, daß das Eingangzieheisen (12) und das Einlegezieheisen (14) um einen Wert voneinander entfernt sind, der mit dem Durchmesser dieser Zieheisen verknüpft ist, so daß der Winkel einer Faser in Bezug auf die Achse des Stabs einen optimalen Wert hat, der geringstmögliche Reibung gewährleistet.

**Claims**

1. A head (10, 20) for laying optical fibers (2) in alternating spiral pitch grooves (1A) in a cylindrical core (1), comprising a unit (10) of three successive interconnected dies, i.e. an inlet die (12), an indexing die (13) including indexing combs, and an insertion die (14), said unit (10) of three dies being intended to be driven, by the longitudinal movement of the grooved core with alternating spiral pitch through these three dies, in a to-and-fro rotating movement about said movement axis, each optical fiber being guided through an orifice (12A) in the inlet die (12), then introduced into an orifice (13A) in the indexing die (13), and finally being laid in a groove of the core by the insertion die (14), said laying head (10, 20) further including, upstream from the inlet die (12), a mandrel (20) through which the core passes, said mandrel being constituted by a tube (21) having a front guide (22) disposed at its upstream end with the optical fibers passing through said front guide, characterized in that the mandrel (20) is stationary, that the unit (10) of the three interconnected dies is mounted rotatively on a bearing (24) connected to the downstream end of the tube (21) of the mandrel (20), said three dies being secured to each other by a cylindrical die-holder (11) inside which said dies are disposed at a distance from each other, and in that the mandrel (20) includes, between the front guide (22) and the inlet die (12) of the head, a series of disks (23) rotatable about the tube (21).

2. A laying head according to claim 1, characterized in that the inlet die (12) and the insertion die (14) are at a distance apart which is related to the diameter of these dies so that the angle of a fiber relative to the axis of the core is at an optimum value for keeping friction to a minimum.

# FIG.1

# FIG.2

EP 0 217 296 B1